# EUROPEAN PATENT SPECIFICATION

(11) **EP 2 626 955 B1**
(45) Date of publication and mention of the grant of the patent: **27.08.2014**
(21) Application number: 13002489.6
(22) Date of filing: 24.05.2011
(51) Int. Cl.: H01R 13/52, H01R 107/00, H01R 13/633, B60L 11/18, H01R 13/627

(54) **Charging connector**
Ladestecker
Connecteur de chargement

(30) Priority: 28.06.2010 JP 2010146479
(43) Date of publication of application: 14.08.2013
(62) Divisional of application: 11004268.6
(73) Proprietor: TOYOTA JIDOSHA KABUSHIKI KAISHA, Toyota-shi, Aichi-ken, 471-8571 (JP); Sumitomo Wiring Systems, Ltd., Mie 510-8503 (JP)
(72) Inventor: Ichio, Toshifumi, Yokkaichi-City, MIE 510-8503 (JP)
(74) Representative: Müller-Boré & Partner Patentanwälte PartG mbB

(56) References cited:
- WO-A1-2010/060370
- JP-A- 2010 123 521

## Description

The present invention relates to a charging connector to be connected to a vehicle-side connector connected to a battery in a vehicle upon charging the battery.

A charging connector of this type is known, for example, from Japanese Unexamined Patent Publication No. 2010-123521. This connector includes a connector fitting portion connectable to a vehicle-side connector, and this connector fitting portion is provided at a front end opening of a case body. A lever extending in forward and backward directions is accommodated in the case body, a locking portion is provided on a front end side of a lever shaft, and an unlocking portion is provided on a rear end side. The unlocking portion projects out from the case body through an unlocking hole formed in the case body.

Upon charging, the charging connector is connected to the vehicle-side connector, the two connectors are held in a connected state by locking a lock-receiving portion provided on the vehicle-side connector and the locking portion to each other and charging is performed. After charging is completed, the unlocking portion is pushed to cancel the locked state of the locking portion and the lock-receiving portion, whereby the charging connector can be separated from the vehicle-side connector.

However, since it is a premise to use the charging connector outdoors, if water enters a tiny clearance formed between the peripheral edge of the unlocking hole and a side surface portion of the unlocking portion, the water stays in the clearance due to the action of surface tension. If the water in the clearance freezes, water drops deposit on the frozen ice and further freeze. Ice is accumulated by repeated freezing in this way, the lever and the case body become firmly frozen to interfere with an unlocking operation. In order to remove the ice, the ice needs to be crushed or melted, wherefore it is not easy to remove the ice.
WO 2010/060370 A1 discloses the preamble of the independent claim 1.

The present invention was developed in view of the above situation and an object thereof is to avoid interference with an unlocking operation caused by freezing.

This object is solved according to the invention by the features of the independent claims. Preferred embodiments of the invention are subject of the dependent claims.

The present invention is preferably embodied to have the following constructions.

A guiding portion connected to a side surface portion of the unlocking portion particularly via an inclined surface may be provided at a peripheral edge portion of the unlocking hole.

Accordingly, water more easily runs from the side surface portion of the unlocking portion to the guiding portion particularly via the inclined surface and/or due to the surface processing. Thus, entrance of water between the side surface portion of the unlocking portion and the peripheral edge of the unlocking hole can be avoided even at a part of the unlocking portion where the recess is not formed.

A lever shaft accommodated in the case body and having the unlocking portion provided to project from the upper surface thereof may be further provided and a downwardly sloped water draining portion may be provided at least partly around the unlocking portion on the upper surface of the lever shaft.

According to this construction, even if water falls onto the upper surface of the lever shaft via the recess, this water can be drained down from the lever shaft by the water draining portion.

A water guiding portion may be provided on a surface of the lever shaft at least at an end portion at a side of the locking portion.

The water guiding portion may comprise one or more taper surfaces, which substantially are sloped down to extend obliquely downward from a tip portion of the water guiding portion.

A distal edge of the recess may be formed as stepped surface.

The unlocking portion may include:
a pressing surface substantially extending obliquely downward and/or substantially parallel to a part of the case body;
a pair of side surface portions extending downward or inward from the pressing surface at the substantially opposite widthwise sides of the unlocking portion; and
a rear surface portion extending downward or inward at or near the rear end of the unlocking portion.

One or more water drain holes may be formed in at least one lower surface of the case body.

According to the present invention, interference with an unlocking operation caused by freezing can be avoided.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view of a charging connector according to an embodiment when obliquely viewed from front,
FIG. 2 is a side view of the charging connector showing a connected state to a vehicle-side connector,
FIG. 3 is a partial enlarged view showing a part A in FIG. 2,
FIG. 4 is a view showing the internal structure of a case body in FIG. 2,
FIG. 5 is a side view of the charging connector showing a state where an unlocking portion is pushed,
FIG. 6 is a view showing the internal structure of the case body in FIG 2,
FIG. 7 is a front view of the charging connector showing the connected state to the vehicle-side connector,
FIG. 8 is a rear view of the charging connector showing the connected state to the vehicle-side connector,
FIG. 9 is a section along B-B of FIG. 2,
FIG. 10 is a section along C-C of FIG. 2,
FIG. 11 is a section along D-D of FIG. 2,
FIG. 12 is a section along E-E of FIG. 2,
FIG. 13 is a section along F-F of FIG. 5,
FIG. 14 is a perspective view of a lever according to the embodiment when obliquely viewed from front,
FIG. 15 is a plan view of the lever,
FIG. 16 is a side view of the lever,
FIG. 17 is a bottom view of the lever,
FIG. 18 is a front view of the lever,
FIG. 19 is a section along G-G of FIG. 17,
FIG. 20 is a section along H-H of FIG. 16,
FIG. 21 is a section along I-I of FIG. 16,
FIG. 22 is a section along J-J of FIG. 16,
FIG. 23 is a section along K-K of FIG. 16.

### <Embodiment>

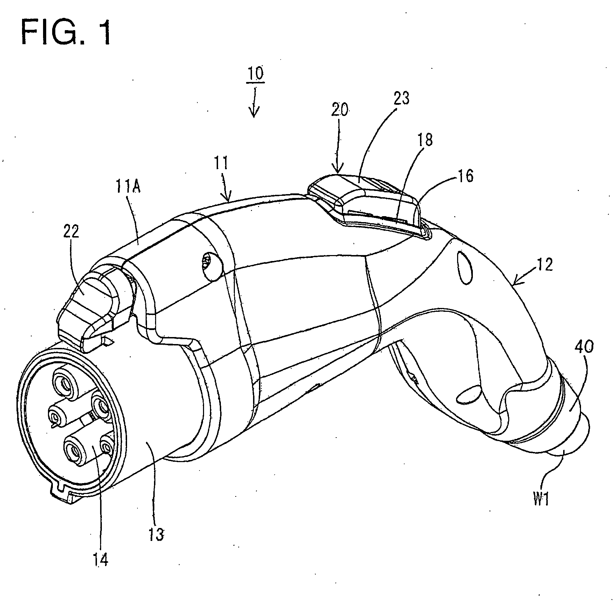

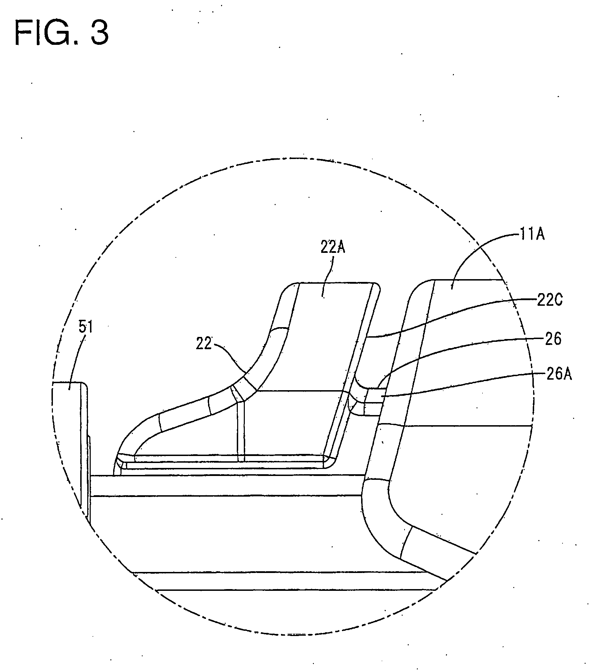

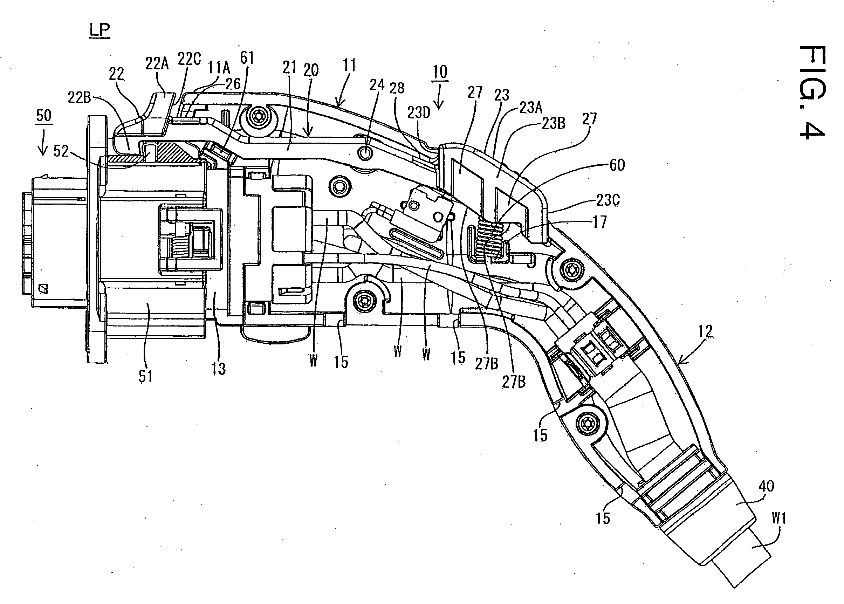

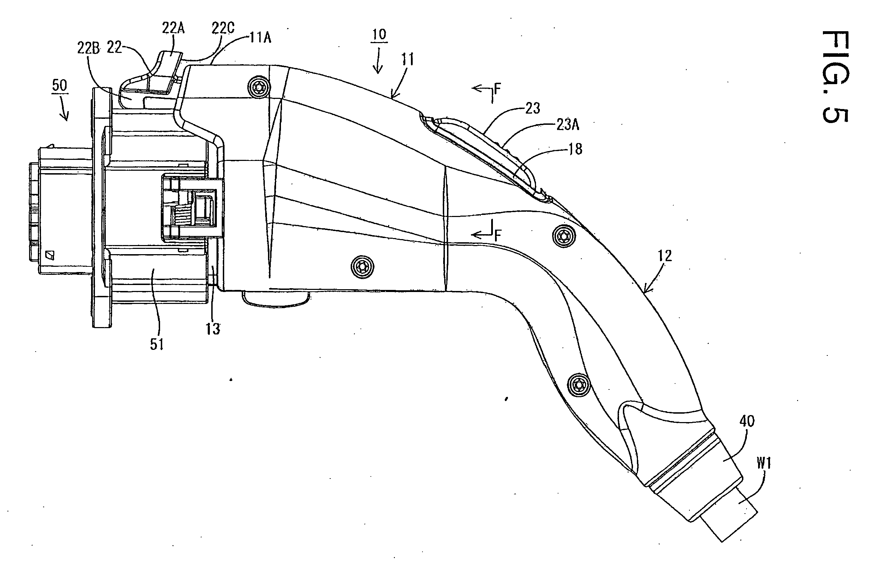

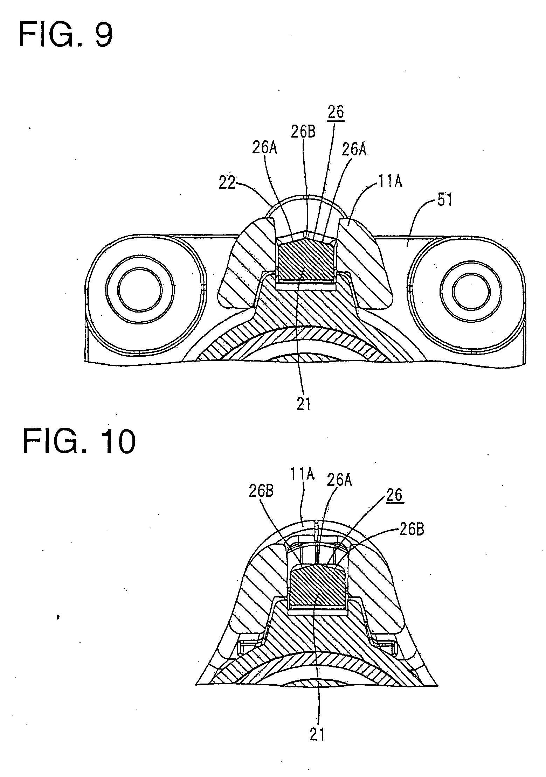

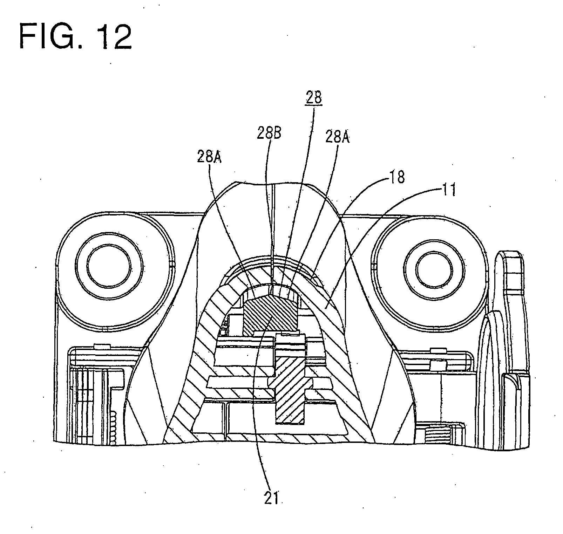

One particular embodiment of the present invention is described with reference to FIGS. 1 to 23. A charging connector 10 in this embodiment particularly substantially is gun-shaped as a whole and includes a connector main body 11 constituting or forming part of a front portion (particularly substantially a front half) and a grip 12 extending obliquely downward from a rear end portion of this connector main body 11 as shown in FIG. 1. The connector main body 11 and the grip 12 are both made e.g. of synthetic resin and integrally or unitarily molded. A (particularly substantially cylindrical) connector fitting portion 13 substantially projecting forward is provided at or near a front end portion of the connector main body 11. Further, a lever shaft 21 which constitutes a main part or forms part of a lever 20 is at least partly accommodated in the connector main body 11 as shown in FIG. 4. Note that a "case body" particularly corresponds to the connector main body 11 and the grip 12.

The connector fitting portion 13 is formed as a separate member from the connector main body 11, and fixed to the front end portion of the connector main body 11 by an unillustrated locking means. One or more, particularly a plurality of (particularly substantially cylindrical) terminal accommodating portions 14 are provided in the connector fitting portion 13. These terminal accommodating portions 14 substantially project forward from the back wall of the connector fitting portion 13. One or more cavities for at least partly accommodating one or more respective terminal fittings (not shown) are formed in the terminal accommodating portion(s) 14.

One or more wires W extend backward from the connector fitting portion 13. These wires W are pulled into the interior of the grip 12 through the interior of the connector main body 11 and are or may be bundled into one cable W1 by being covered by an outer sheath particularly in the grip 12. The cable W1 is fixed by a cable grip ring or the like in the grip 12 and further fixed by a bush 40 at a rear end portion of the grip 12.

Since the bush 40 is to be held in close contact with the inner peripheral surface of the rear end opening of the grip 12 and the outer peripheral surface of the cable W1, water or any other liquid is prevented from entering the interior of the grip 12 through the rear end of the grip 12. Since one or more, particularly a plurality of water drain holes 15 are formed in the lower surfaces of the connector main body 11 and/or the grip 12, water or liquids can be allowed to escape to the outside through these water drain holes 15 even if it enters the interiors of the connector main body 11 and the grip 12.

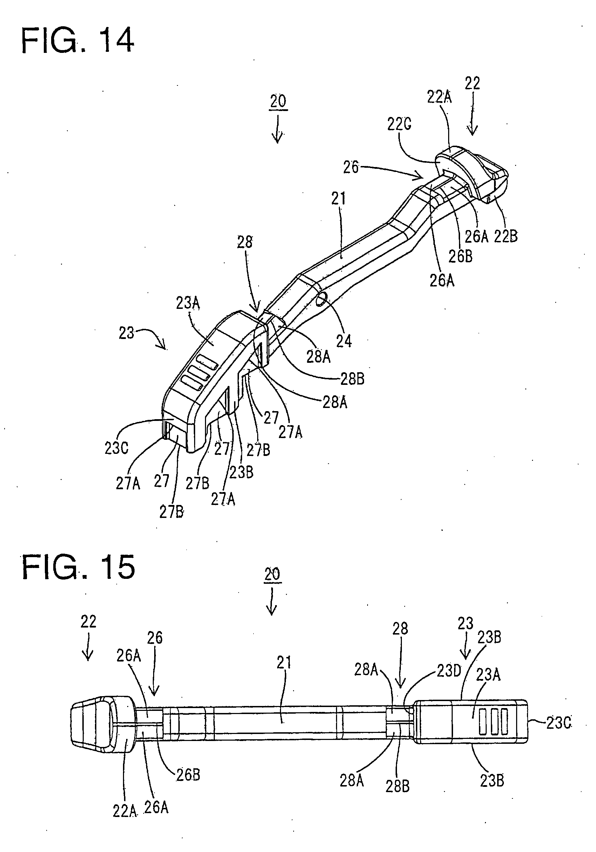

The lever 20 includes the lever shaft 21 substantially extending in forward and backward directions as shown in FIG. 14, a locking portion 22 is provided on or near a front end portion of the lever shaft 21 and an unlocking portion 23 is provided on a rear end portion of the lever shaft 21. A lever rotation center portion 24 (particularly shaft-supported in the connector main body 11) is provided substantially in an intermediate part (particularly in a central part) of the lever shaft 21 in forward and backward directions, and the lever shaft 21 can be inclined particularly substantially like a seesaw about this lever rotation center portion 24 to move both front and rear end portions thereof.

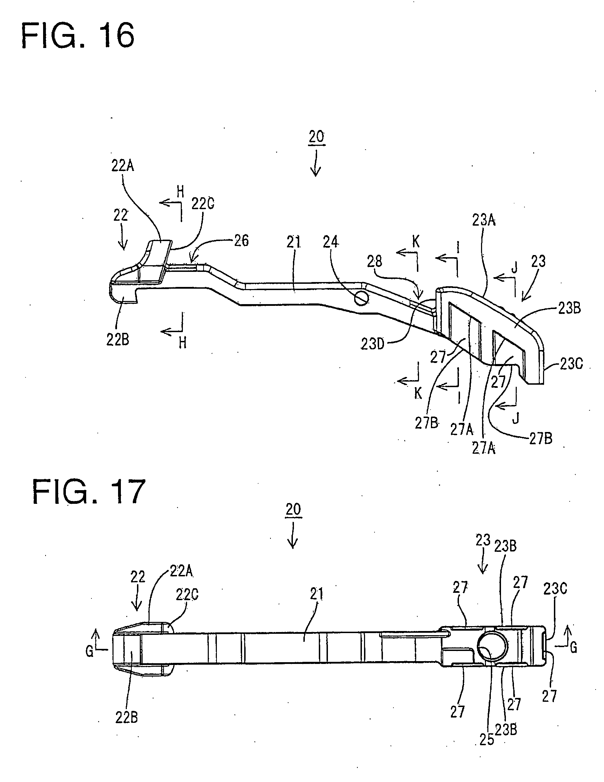

As shown in FIG. 16, the lever shaft 21 substantially extends horizontally forward from the lever rotation center portion 24, then substantially extends somewhat obliquely upward and extends horizontally again, whereas it substantially extends obliquely downward toward the back from the lever rotation center portion 24. Thus, the locking portion 22 is relatively located above the unlocking portion 23.

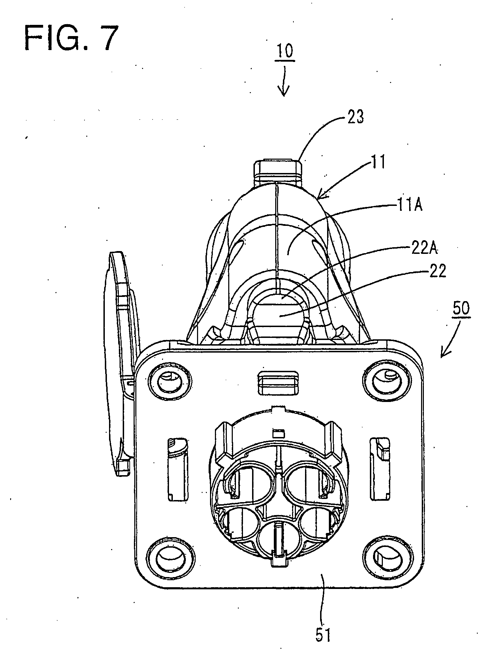

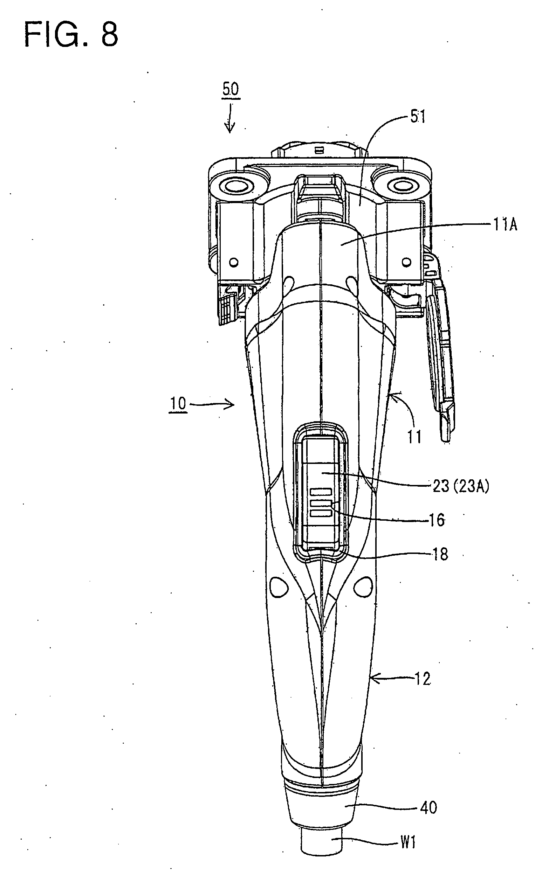

As shown in FIGS. 7 and 8, the connector main body 11 is formed to bulge outward or upward at a position substantially corresponding to the lever 20, and a front end portion of this bulging portion serves as a protection wall 11A. This protection wall 11 A substantially bulges forward. A front end side of the lever shaft 21 is at least partly covered by the protection wall 11A with only the locking portion 22 exposed. This can prevent the lever shaft 21 from being damaged when the charging connector 10 is e.g. dropped by mistake.

The locking portion 22 includes a head portion 22A projecting upward or outward from a horizontal section in the front end portion of the lever shaft 21 and a latching portion 22B projecting downward or inward from this horizontal section. The latching portion 22B projects more backward toward its bottom end, i.e. has an overhanging or undercut shape. Accordingly, a lock projection 52 to be locked to the latching portion 22B particularly is also formed to substantially have a so-called overhanging shape as shown in FIG. 4. Thus, even if the two connectors 10, 50 are pulled in separating directions with the latching portion 22B and the lock projection 52 locked, a locked state of the latching portion 22B and the lock projection 52 is not canceled. Note that the lock projection 52 particularly is reinforced by having a surface thereof covered by a metal flat plate.

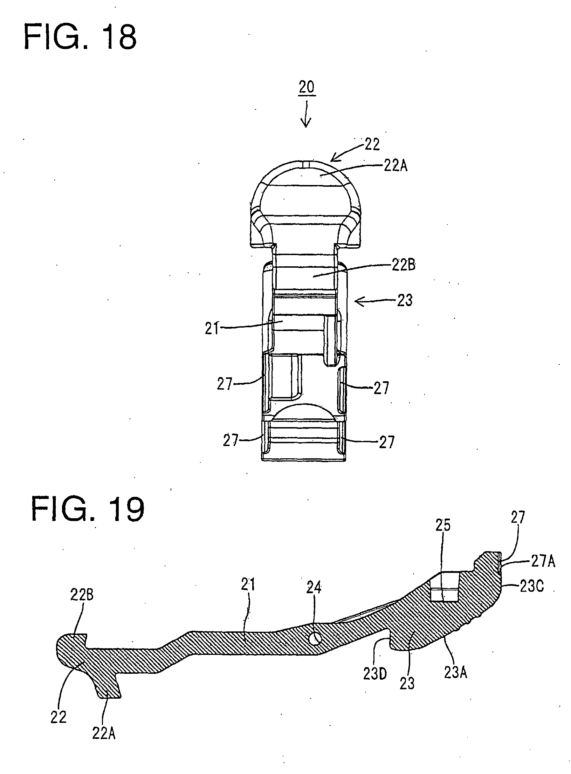

The head portion 22A particularly is formed to be wider toward its upper end as shown in FIG. 18. This particularly is to ensure sufficient strength to withstand an impact even if the head portion 22A directly hits the ground surface.

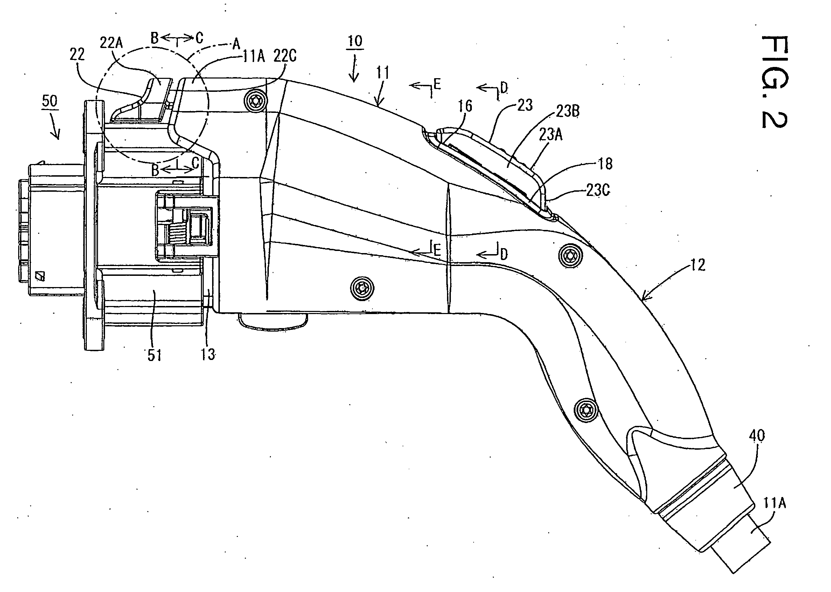

As shown in FIG. 16, a rear surface 22C of the head portion 22A projects more backward toward its upper end, i.e. is formed to have an overhanging shape. As shown in FIG. 2, the locking portion 22 is at least partly exposed forward from the front end opening (protection wall 11 A) of the connector main body 11. Further, with the two connectors 10, 50 connected, an upper part of the front end of the connector main body 11 (front end of the protection wall 11 A) is arranged substantially in parallel to the rear surface 22C of the head portion 22A and the upper surface of the connector main body 11 particularly is arranged substantially in flush with the upper surface of the head portion 22A.

As can be understood from FIGS. 7 and 8, the vehicle-side connector 50 is or may be mounted in a somewhat upward facing posture in a vehicle and, accordingly, the charging connector 10 to be connected to the vehicle-side connector 50 is in a somewhat downward facing posture. Thus, in its typical use orientation, the rear surface 22C of the head portion 22A is in a vertical posture to extend substantially in a vertical direction with the charging connector 10 connected to the vehicle-side connector 50. In other words, the rear surface 22C of the head portion 22A is in such a posture that an upper end side thereof is displaced in a direction away from the vehicle-side connector 50 with respect to a plane orthogonal to a connecting direction of the two connectors 10, 50.

Since the rear surface 22C of the head portion 22A particularly is in the vertical posture to extend substantially in the vertical direction in the connected state, even if snow accumulated on the head portion 22A melts into water and this water enters between the rear surface 22C of the head portion 22A and the protection wall 11A, this water does not stay on the rear surface 22C of the head portion 22A, wherefore a situation where the locking portion 22 cannot be unlocked due to freezing between the rear surface 22C of the head portion 22A and the protection wall 11 A can be avoided.

As shown in FIGS. 1 and 2, the unlocking portion 23 is exposed to project upward or outward from an unlocking hole 16 formed in (particularly a rear part of the upper or outer surface of) the connector main body 11. The unlocking portion 23 projects upward or outward at (particularly a rear end portion of) the lever shaft 21 as shown in FIG. 16. The unlocking portion 23 includes a pressing surface 23A particularly substantially extending obliquely downward or substantially parallel to the grip 12. A pair of side surface portions 23B extending downward or inward from (particularly the substantially opposite widthwise edges of) the pressing surface 23A are provided at the substantially opposite widthwise sides of the unlocking portion 23. Further, a rear surface portion 23C extending downward or inward from the rear edge of the pressing surface 23A is provided at the rear end of the unlocking portion 23. Note that a spring receiving portion 25 in which the upper end of a coil spring 60 is to be accommodated particularly is provided in a lower surface portion of the unlocking portion 23 as shown in FIGS. 17 and 19.

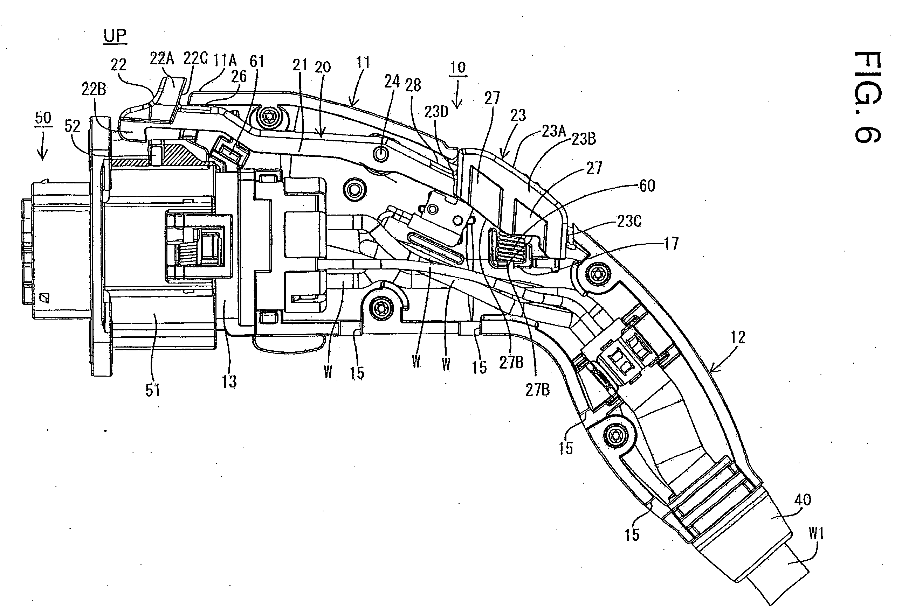

As shown in FIG. 4, a spring mounting portion 17 for supporting the bottom end of the coil spring 60 is provided at a position of the connector main body 11 substantially vertically facing the spring receiving portion 25. The coil spring 60 is mounted in a compressed state between the spring receiving portion 25 and the spring mounting portion 17 and pushes or biases the rear end portion of the lever shaft 21 upward or outward, whereby the locking portion 22 is constantly biased toward a locking position LP shown in FIG. 4. On the other hand, when the unlocking portion 23 is pressed down or inward, the locking portion 22 is relatively pushed up and displaced to an unlocking position UP shown in FIG. 6.

As shown in FIG. 4, the lever 20 at the locking position LP particularly is in contact with an impact absorbing pad 61 provided above the connector fitting portion 13 in the connector main body 11. Thus, when the unlocking portion 23 is released at the unlocking position UP, the locking portion 22 moves from the unlocking position UP to the locking position LP due to a spring force of the coil spring 60, but an impact is absorbed when the lever shaft 21 collides with the impact absorbing pad 61 and a movement of the locking portion 22 is stopped at the locking position LP.

It is a premise to use the charging connector 10 of this embodiment outdoors, and rain water may splash on the charging connector 10 or snow may directly accumulate on the charging connector 10 while charging is performed with the charging connector 10 connected to the vehicle-side connector 50 particularly in a cold region. In this case, water having deposited on the locking portion 22 or the unlocking portion 23 may freeze to interfere with an unlocking operation.

For example, at the locking portion 22, water may fall onto the upper surface of the lever shaft 21 through the clearance between the rear surface 22C of the head portion 22A and the front surface of the protection wall 11 A. If ice deposits on the upper surface of the lever shaft 21, this ice is likely to interfere with the inner wall of the protection wall 11 A. This disables the locking portion 22 to move from the locking position to the unlocking position.

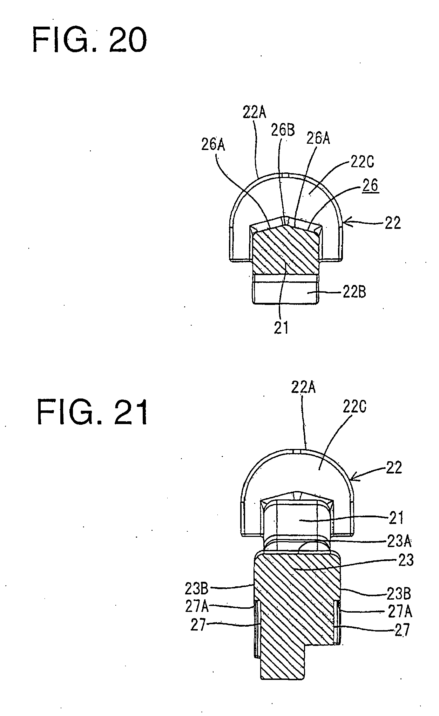

Accordingly, in this embodiment, a water guiding portion 26 is provided at a front end surface (end portion at a side of the locking portion 22) on the upper surface of the lever shaft 21 as shown in FIGS. 16 and 20, and water having fallen to this water guiding portion 26 is caused to directly run down from the lever shaft 21. This water guiding portion 26 particularly is formed by a pair of taper surfaces 26A. The both taper surfaces 26A substantially are sloped down to extend obliquely downward from a tip portion 26B arranged in the widthwise center of the water guiding portion 26 and/or substantially bilaterally symmetrically arranged.

On the other hand, at the unlocking portion 23, water may enter, for example, a clearance between the side surface portion 23B and the peripheral edge of the unlocking hole 16 and stay between the side surface 23B and the peripheral edge of the unlocking hole 16 due to the action of surface tension. If the water between the side surface portion 23B and the peripheral edge of the unlocking hole 16 freezes, the unlocking portion 23 cannot be pushed in any longer. This phenomenon could occur not only at the side surface portions 23B, but also at the rear surface portion 23C and a front surface portion 23D.

As shown in FIGS. 14 and 16, one or more, particularly a plurality of recesses 27 are formed in the side surface portions 23B of the unlocking portion 23. The recesses 27 are provided at positions facing the peripheral edge of the unlocking hole 16. Here, upper edges 27A of the recesses 27 are set to be located higher than the peripheral edge of the unlocking hole 16 when the locking portion 22 is at the locking position. Since distances from the recesses 27 to the peripheral edge of the unlocking hole 16 particularly are longer than those from the side surface portions 23B to the peripheral edge of the unlocking hole 16, the action of surface tension becomes more unlikely. Thus, water more easily runs down via the recesses 27, thereby eliminating a likelihood that water freezes in the recesses 27 to interfere with the unlocking operation. Similarly, a recess 27 is also formed in the rear surface portion 23C.

A pair of recesses 27 particularly are arranged one after the other in each side surface portion 23B. The peripheral edges of the recesses 27 are stepped surfaces at an angle different from 0° or 180°, preferably substantially orthogonal to the side surface portions 23B. Out of these peripheral edges, the front and rear edges of the recesses 27 particularly both substantially extend in the vertical direction and/or substantially are arranged in parallel. Further, upper edges 27A of the recesses 27 particularly substantially extend obliquely downward toward the rear surface portion 23C substantially in parallel to the pressing surface 23A of the unlocking portion 23. On the other hand, only one recess 27 is formed in the rear surface portion 23C, and the peripheral edge of this recess 27 is also a stepped surface at an angle different from 0° or 180°, preferably substantially orthogonal to the rear surface portion 23C.

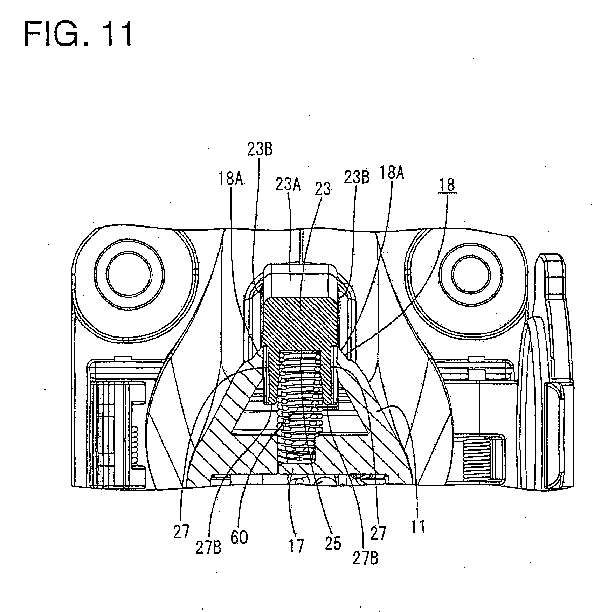

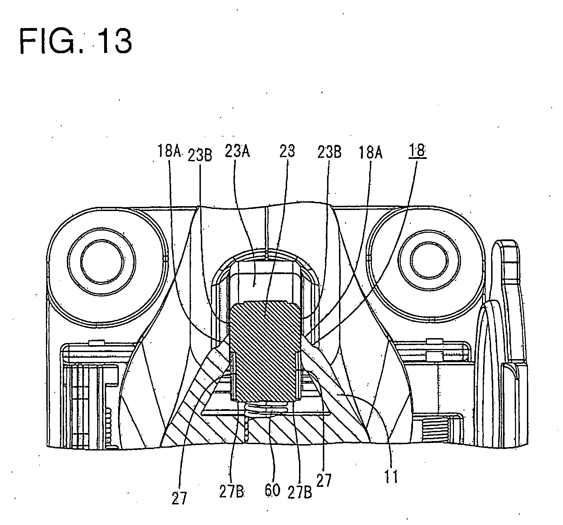

Since the upper or distal edges 27A of the recesses 27 particularly are formed as stepped surfaces as shown in FIGS. 19, 21 and 22, even if a small amount of ice is formed between the recesses 27 and the peripheral edge of the unlocking hole 16, this ice can be crushed by a shear force. In other words, if the unlocking portion 23 is pushed in, the upper edges 27A of the recesses 27 at least partly enter the unlocking hole 16 as shown in FIGS. 11 and 13. Thus, the upper edges 27A of the recesses 27 and the peripheral edge of the unlocking hole 16 act as shear blades. Therefore, even if ice is formed in the recesses 27, it can be easily crushed by the upper edges 27A of the recesses 27.

No recess 27 particularly is formed in the front surface portion 23D of the unlocking portion 23. This is because the lever shaft 21 and the front surface portion 23D of the unlocking portion 23 are arranged to form an undercut part as shown in FIG. 16 and a slide mold is necessary to form the recess 27 in the front surface portion 23D of the unlocking portion 23, which complicates a mold structure and increases mold cost. Accordingly, water having entered between the front surface portion 23D of the unlocking portion 23 and the peripheral edge of the unlocking hole 16 needs to be directly dropped onto the upper surface of the lever shaft 21. To this end, a distance between the front surface portion 23D of the unlocking portion 23 and the peripheral edge of the unlocking hole 16 particularly is so set that the action of surface tension is unlikely.

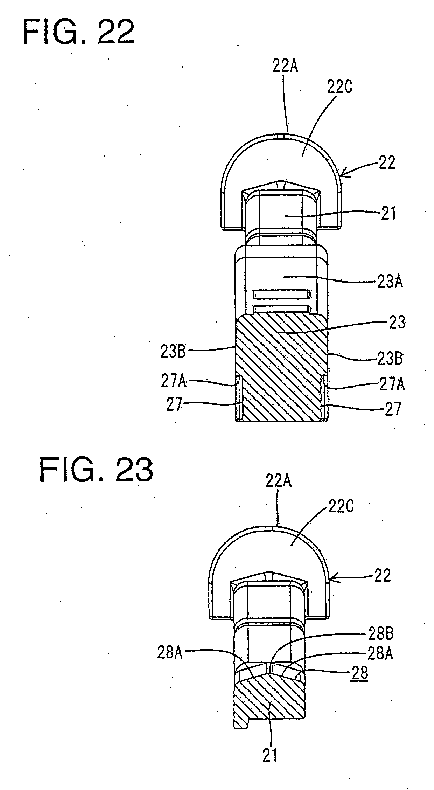

However, if water having fallen onto the upper surface of the lever shaft 21 freezes in this state, ice formed on the upper surface of the lever shaft 21 interferes with the inner wall of the connector main body 11, thereby interfering with the unlocking portion. Accordingly, at least one water draining portion 28 is provided around or near the unlocking portion 23 on the upper surface of the lever shaft 21. This water draining portion 28 particularly is constructed similarly to the water guiding portion 26 and includes a pair of taper surfaces 28A. As shown in FIG. 23, the both taper surfaces 28A are sloped down to substantially extend obliquely downward from a tip portion 28B arranged in the widtwise intermediate position (particularly the widthwise center) of the water draining portion 28 and/or substantially bilaterally symmetrically arranged. By this, water having fallen down onto the water draining portion 28 can be drained down from the lever shaft 21:

In addition to these, a guiding portion 18 connected to the side surface portions 23B of the unlocking portion 23 via an inclined surface 18A is provided at a peripheral edge portion of the unlocking hole 16 as shown in FIGS. 11, 12 and 13. The inclined surface 18A in this embodiment particularly is a steeply inclined surface with a steep angle of inclination. The guiding portion 18 is provided at the peripheral edge portion of the unlocking hole 16 particularly substantially over the entire circumference. If water deposits on the side surface portion 23B or the like of the unlocking portion 23, this water is more easily guided to the guiding portion 18 by the inclined surface 18A. Thus, entrance of water between the unlocking portion 23 and the peripheral edge of the unlocking hole 16 can be maximally reduced.

Next, functions of this embodiment constructed as described above are described. First, when the two connectors 10, 50 are connected, the locking portion 22 moves onto the lock projection 52 to incline the lever 20. When the two connectors 10, 50 are further connected, a connected state thereof is reached as shown in FIG. 4. Simultaneously with this, the locking portion 22 moves over the lock projection 52, the lever 20 is resiliently at least partly restored and the locking portion 22 and the lock projection 52 are locked to each other in the connecting direction. In this way, the two connectors 10, 50 are locked in the connected state. A battery is charged with the two connectors 10, 50 connected. When charging is completed, the grip 12 is held by hand and the pressing surface 23A of the unlocking portion 23 is operated e.g. pressed with a thumb.

Here, if water enters the connector main body 11 from the locking portion 22, it falls onto the water guiding portion 26 and particularly is caused to run down from the lever shaft 21 by the both taper surfaces 26A. When water deposits on the unlocking portion 23, this water particularly is guided toward the guiding portion 18 by the inclined surface 18A of the guiding portion 18 and runs down along the outer peripheral surface of the connector main body 11. Thus, water entrance into the connector main body 11 through the unlocking hole 16 is prevented.

Water having deposited on the unlocking portion 23 may enter the recess 27. In this case, the water particularly runs down along a lower edge portion 27B of the recess 27, wherefore the water enters the connector main body 11 and is drained to the outside of the connector main body 11 through the water drain holes 15. Even if ice should be formed in the recesses 27, it is sheared and crushed between the upper edges 27A of the recesses 27 and the peripheral edge of the unlocking hole 16 by pressing in the unlocking portion 23.

Further, water having entered the connector main body 11 through a clearance between the front surface portion 23D of the unlocking portion 23 and the peripheral edge of the unlocking hole 16 particularly falls onto the water draining portion 28 and runs down from the lever shaft 21 by the both taper surfaces 28A. Therefore, it can be avoided that the unlocking portion 23 is frozen at the peripheral edge of the unlocking hole 16 and the unlocking operation cannot be performed.

As described above, according to this embodiment, it can be avoided (or like-liness reduced) that ice is formed on the upper surface of the lever shaft 21 and interferes with the inner wall of the protection wall 11 A since the water guiding portion 26 particularly is provided at the end portion of the upper surface of the lever shaft 21 at the side of the locking portion 22. Further, water can run down from the lever shaft 21 particularly by the presence of the both taper surfaces 26A since the water guiding portion 26 particularly includes a pair of taper surfaces 26A. Therefore, interference with the unlocking operation caused by the freezing of the locking portion 22 can be avoided.

Further, water more easily runs down via the one or more recesses 27 since the recesses 27 particularly are provided in the both side surface portions 23B and the rear surface portion 23C of the unlocking portion 23. In other words, water is unlikely to stay between the unlocking portion 23 and the peripheral edge of the unlocking hole 16. Further, water having deposited on the unlocking portion 23 is more unlikely to enter between the unlocking portion 23 and the peripheral edge of the unlocking hole 16 since particularly being guided to the guiding portion 18 via the inclined surface 18A. Furthermore, water having entered between the front surface portion 23D of the unlocking portion 23 and the peripheral edge of the unlocking hole 16 falls onto the water draining portion 28 and runs down due to the presence of the both taper surfaces 28A. Therefore, interference with the unlocking operation caused by the freezing of the locking portion 22 can be avoided.

Accordingly, to avoid interference with an unlocking operation caused by freezing, a charging connector 10 to be connected to a vehicle-side connector 50 connected to a battery in a vehicle upon charging the battery is provided with a connector main body 11 including at least one connector fitting portion 13 connectable to the vehicle-side connector, at least one locking portion 22 for holding the vehicle-side connector 50 and the connector fitting portion 13 in a connected state by being locked to a lock projection 52 provided on the vehicle-side connector 50, an unlocking portion 23 capable of canceling the locked state of the locking portion 22 and the lock projection 52, and an unlocking hole 16 formed in the connector main body 11 at a position substantially corresponding to the unlocking portion 23. The unlocking portion 23 projects to the outside of the connector main body 11 through the unlocking hole 16 and includes recesses 27 at positions facing the peripheral edge of the unlocking hole 16.

### <Other examples>

The present invention is not limited to the above described and illustrated embodiment. For example, the following embodiments are also included in the technical scope of the present invention.
(1) Although the water guiding portion 26 is formed by the taper surfaces 26A in the above embodiment, it may be formed by an arcuate or bent surface according to the present invention.
(2) Although the water guiding portion 26 is formed by the pair of taper surfaces 26A in the above embodiment, it may be formed by one taper surface or three or more taper surfaces according to the present invention.
(3) Although the recesses 27 are formed in both the side surface portions 23B and the rear surface portion 23C of the unlocking portion 23 in the above embodiment, the recesses 27 may be formed in either the side surface portions 23B or the rear surface portion 23C according to the present invention. Further, although two recesses 27 are so formed in each side surface portion 23B in the above embodiment as to divide this side surface portion 23B into two areas, one recess may be formed substantially in the entire area of the side surface portion 23B or three recesses may be so formed as to divide the side surface portion 23B into substantially three areas according to the present invention. In this case, it is preferable to maximally narrow partition walls defining the respective recesses.
(4) Although the guiding portion 18 is provided at the peripheral edge portion of the unlocking hole 16 particularly substantially over the entire circumference in the above embodiment, guiding portions may be provided only at parts of the peripheral edge portion of the unlocking hole 16 not facing the recesses 27 according to the present invention.
(5) Although the guiding portion 18 is formed by the inclined surface in the above embodiment, it may be formed by applying a surface processing with high water wettability according to the present invention.
(6) Although no recess is formed in the front surface portion 23D of the unlocking portion 23 in the above embodiment, a recess may be formed in the front surface portion 23D according to the present invention if the front surface portion 23D does not form an undercut part and the recess can be formed without using a slide mold. In this case, the water draining portion 28 may be omitted.

### LIST OF REFERENCE NUMERALS

- 10: charging connector
- 11: connector main body (case body)
- 12: grip (case body)
- 13: connector fitting portion
- 16: unlocking hole
- 18: guiding portion
- 18A: inclined surface
- 20: lever
- 21: lever shaft
- 22: locking portion
- 23: unlocking portion
- 26: water guiding portion
- 26A: taper surface
- 26B: tip portion
- 27: recess
- 28: water draining portion
- 28A: taper surface
- 28B: tip portion
- 50: vehicle-side connector
- 52: lock projection (lock-receiving portion)

## Claims

1. A charging connector (10) to be connected to a vehicle-side connector (50) connected to a battery in a vehicle upon charging the battery, comprising:
a case body (11; 12) including a connector fitting portion (13) connectable to the vehicle-side connector (50);
a lever (20) comprising:
a lever shaft (21) accommodated in the case body (11; 12);
a locking portion (22) provided on or near a front end portion of the lever shaft (21) for holding the vehicle-side connector (50) and the charging connector (10) in a connected state by being locked to a lock-receiving portion (52) provided on the vehicle-side connector (50);
an unlocking portion (23) provided on a rear end portion of the lever shaft (21) capable of canceling a locked state of the locking portion (22) and the lock-receiving portion (52);
**characterized in that**
a water guiding portion (26) is provided on a surface of the lever shaft (21) at least at an end portion at a side of the locking portion (22); and
the water guiding portion (26) comprises one or more taper surfaces (26A), which substantially are sloped down to extend obliquely downward from a tip portion (26B) of the water guiding portion (26) such that water having fallen to this water guiding portion (26) is caused to directly run down from the lever shaft (21).

2. The charging connector of claim 1, wherein the taper surface (26A) is flat.

3. The charging connector of claim 1, wherein the locking portion (22) is at least partly exposed forward from a front end opening of the connector main body (11), and
a rear surface (22C) of a head portion (22A) of said locking portion (22) projects more backward toward its upper end.

4. The charging connector of any one of the preceding claims, wherein an unlocking hole (16) is formed in the case body (11; 12) at a position substantially corresponding to the unlocking portion (23), and
at least one guiding portion (18) connected to a side surface portion of the unlocking portion (23) is provided at a peripheral edge portion of the unlocking hole (16).

5. The charging connector of claim 4, wherein the guiding portion (18) comprises an inclined surface (18A).

6. The charging connector of any one of the preceding claims, wherein the unlocking portion (23) includes:
a pressing surface (23A);
a front surface portion (23D);
a pair of side surface portions (23B) extending downward or inward from the pressing surface (23A) at the substantially opposite widthwise sides of the unlocking portion (23); and
a rear surface portion (23C) extending downward or inward at or near the rear end of the unlocking portion (23);
wherein at least one of the pair of side surface portions (23B) and the rear surface portion (23C) includes at least one recess (27); and
upper edges (27A) of the recesses (27) are set to be located higher than the peripheral edge of the unlocking hole (16) when the locking portion (22) is at the locking position.

7. The charging connector of claim 6, wherein the upper edges (27A) of the recesses (27) at least partly enter the unlocking hole (16), when the unlocking portion (23) is pushed in.

8. The charging connector of any one of the preceding claims, wherein one or more water drain holes (15) are formed in at least one lower surface of the case body (11; 12).

## Patentansprüche

1. Ein Ladesteckverbinder (10), der an einen fahrzeugseitigen Steckverbinder (50) anzuschließen ist, der an eine Batterie in einem Fahrzeug angeschlossen ist, um die Batterie zu laden, der Folgendes umfasst:
einen Gehäuse-Korpus (11; 12) der einen Steckverbinder-Anschlussabschnitt *(connector fitting portion)* (13) beinhaltet, der mit dem fahrzeugseitigen Steckverbinder (50) verbindbar ist;
einen Hebel (20), der Folgendes umfasst:
eine Hebelwelle (21), die im Gehäuse-Korpus (11; 12) untergebracht ist;
einen Verriegelungsabschnitt (22), der im Bereich oder in der Nähe eines vorderen Endabschnitts der Hebelwelle (21) bereitgestellt wird, um den fahrzeugseitigen Steckverbinder (50) und den Ladesteckverbinder (10) in einem Verbindungszustand zu halten, indem er an einem Verschluss empfangenden Abschnitt (52) festgemacht wird (*locked to*), der am fahrzeugseitigen Steckverbinder (50) bereitgestellt wird;
einen entriegelnden Abschnitt (23), der an einem hinteren Endabschnitt der Hebelwelle (21) bereitgestellt wird und der in der Lage ist, einen Verriegelungszustand des Verriegelungsabschnitts (22) und des Verschluss empfangenden Abschnitts (52) aufzuheben;
**dadurch gekennzeichnet, dass**
ein Wasser-Führungsabschnitt (26) auf einer Fläche der Hebelwelle (21) bereitgestellt wird zumindest an einem Endabschnitt an einer Seite des Verriegelungsabschnitts (22); und dass
der Wasser-Führungsabschnitt (26) eine oder mehrere Konusflächen (26A) umfasst, die im Wesentlichen schräg abfallend sind, um von einem Spitzenabschnitt (26B) des Wasser-Führungsabschnitts (26) derart schräg nach hinten zu verlaufen, dass Wasser, das zu diesem Wasser-Führungsabschnitt (26) herabfällt, dazu verleitet wird, direkt von der Hebelwelle (21) herunterzulaufen.

2. Der Ladesteckverbinder nach Anspruch 1, wobei die Konusfläche (26A) flach ist.

3. Der Ladesteckverbinder nach Anspruch 1, wobei der Verriegelungsabschnitt (22) zumindest teilweise nach vorne ausgehend von einer Frontpartieöffnung des Gehäuse-Korpus (11) freiliegend ist, und
eine hintere Fläche (22C) eines Kopfabschnitts (22A) des genannten Verriegelungsabschnitts (22) mehr nach hinten zu ihrem oberen Ende hin vorspringt.

4. Der Ladesteckverbinder nach irgendeinem der vorhergehenden Ansprüche, wobei ein Entriegelungsloch (16) im Gehäuse-Korpus (11; 12) an einer Position gebildet wird, die im Wesentlichen dem entriegelnden Abschnitt (23) entspricht, und
mindestens ein führender Abschnitt (18), der mit einem Abschnitt einer Seitenfläche des entriegelnden Abschnitts (23) verbunden ist, an einem peripheren Randabschnitt des Entriegelungslochs (16) bereitgestellt wird.

5. Der Ladesteckverbinder nach Anspruch 4, wobei der führende Abschnitt (18) eine geneigte Fläche (18A) umfasst.

6. Der Ladesteckverbinder nach irgendeinem der vorhergehenden Ansprüche, wobei der entriegelnde Abschnitt (23) Folgendes umfasst:
eine pressende Fläche (23A);
einen Frontflächenabschnitt (23D);
ein Paar Seitenflächenabschnitte (23B), die ausgehend von der pressenden Fläche (23A) an den in Querrichtung im Wesentlichen entgegengesetzten Seiten des entriegelnden Abschnitts (23) nach unten oder nach innen verlaufen; und
einen Rückseitenabschnitt (23C), der am oder in der Nähe des hinteren Endes des entriegelnden Abschnitts (23) nach unten oder nach innen verläuft;
wobei mindestens einer aus dem Paar Seitenflächenabschnitten (23B) und der Rückseitenabschnitt (23C) mindestens eine Vertiefung (27) beinhaltet; und
obere Ränder (27A) der Vertiefungen (27) derart gesetzt werden, dass sie höher liegen als der periphere Rand des Entriegelungslochs (16), wenn sich der Verriegelungsabschnitt (22) in der Verriegelungsposition befindet.

7. Der Ladesteckverbinder nach Anspruch 6, wobei die oberen Ränder (27A) der Vertiefungen (27) zumindest teilweise in das Entriegelungsloch (16) hineingehen, wenn der entriegelnde Abschnitt (23) eingedrückt ist.

8. Der Ladesteckverbinder nach irgendeinem der vorhergehenden Ansprüche, wobei ein oder mehrere Wasserablauflöcher (15) an mindestens einer Unterseite des Gehäuse-Korpus' (11; 12) gebildet werden.

## Revendications

1. Un connecteur de chargement (10) à brancher sur un connecteur (50) côté véhicule raccordé à une batterie dans un véhicule, pour le chargement, comprenant :
un corps de boîtier (11 ; 12) incluant une portion de connexion (13) de connecteur pouvant être branchée sur le connecteur (50) côté véhicule ;
un levier (20) comprenant :
un axe de levier (21) logé dans le corps de boîtier (11 ; 12) ;
une portion de verrouillage (22) fournie sur ou à proximité d'une portion terminale frontale de l'axe de levier (21) pour maintenir le connecteur (50) côté véhicule et le connecteur de chargement (10) dans un état branché en étant bloquée sur une portion de réception de verrouillage (52) fournie sur le connecteur (50) côté véhicule ;
une portion de déverrouillage (23) fournie sur une portion terminale arrière de l'axe de levier (21) capable d'annuler un état verrouillée de la portion de verrouillage (22) et de la portion de réception de verrouillage (52) ;
**caractérisé en ce que**
une portion de guidage d'eau (26) est fournie sur une surface de l'axe de levier (21) au moins dans une portion terminale auprès d'un côté de la portion de verrouillage (22) ; et
la portion de guidage d'eau (26) comprend une ou plusieurs surfaces coniques (26A), qui sont essentiellement inclinées vers le bas pour s'étendre obliquement vers le bas à partir d'une portion de pointe (26B) de la portion de guidage d'eau (26) afin que l'eau tombée sur cette portion de guidage d'eau (26) est amenée à s'écouler directement vers le bas à partir de l'axe de levier (21).

2. Le connecteur de chargement d'après la revendication 1, sachant que la surface conique (26A) est plate.

3. Le connecteur de chargement d'après la revendication 1, sachant que la portion de verrouillage (22) est au moins en partie exposée en avant à partir d'une ouverture terminal frontale du corps principale de connecteur (11), et que
une surface arrière (22C) d'une portion de tête (22A) de ladite portion de verrouillage (22) saille plus vers l'arrière en direction de son extrémité supérieure.

4. Le connecteur de chargement d'après une des revendications précédentes, sachant qu'un trou de déverrouillage (16) est formé dans le corps de boîtier (11 ; 12) dans une position correspondant essentiellement à la portion de déverrouillage (23), et que
au moins une portion de guidage (18) raccordée à une portion de surface latérale de la portion de déverrouillage (23) est fournie auprès d'une portion de bord périphérique du trou de déverrouillage (16).

5. Le connecteur de chargement d'après la revendication 4, sachant que la portion de guidage comprend une surface inclinée (18A).

6. Le connecteur de chargement d'après une des revendications précédentes, sachant que la portion de déverrouillage (23) comporte :
une surface de pressage (23A) ;
une portion de surface frontale (23D) ;
une paire de portions de surface latérale (23B) s'étendant vers le bas ou vers l'intérieur à partir de la surface de pressage (23A) à des côtés essentiellement opposés transversalement de la portion de déverrouillage (23) ; et
une portion de surface arrière (23C) s'étendant vers le bas ou vers l'intérieur auprès de ou à proximité de l'extrémité arrière de la portion de déverrouillage (23) ;
sachant qu'au moins une parmi la paire de portions de surface latérale (23B) et la portion de surface arrière (23C) comporte au moins un renfoncement (27) ; et
des bords supérieurs (27A) des renfoncements (27) doivent être positionnés à une hauteur supérieure à celle du bord périphérique du trou de déverrouillage (16), quand la portion de verrouillage (22) se trouve dans la position de verrouillage.

7. Le connecteur de chargement d'après la revendication 6, sachant que les bords supérieurs (27A) des renfoncements (27)entrent au moins partiellement dans le trou de déverrouillage (16), quand la portion de déverrouillage (23) est enfoncée.

8. Le connecteur de chargement d'après une des revendications précédentes, sachant qu'un ou plusieurs orifices d'évacuation d'eau (15) sont constitués dans au moins une surface inférieure du corps de boîtier (11 ; 12).
